# EUROPEAN PATENT SPECIFICATION

(11) **EP 3 709 012 B1**
(45) Date of publication and mention of the grant of the patent: **21.10.2026**
(21) Application number: 20161705.7
(22) Date of filing: 09.03.2020
(51) Int. Cl.: G01N 29/04, G01N 29/06, G01N 29/22, G01N 29/26

(54) **ACOUSTIC INSPECTION DEVICE AND METHOD OF OPERATION**
AKUSTISCHE PRÜFVORRICHTUNG UND BETRIEBSVERFAHREN
DISPOSITIF D'INSPECTION ACOUSTIQUE ET SON PROCÉDÉ DE FONCTIONNEMENT

(30) Priority: 14.03.2019 US 201962818229 P
(43) Date of publication of application: 16.09.2020
(73) Proprietor: General Electric Company, Evendale, OH 45215 (US)
(72) Inventor: KLAASSEN, Richard Eugene, Cincinnati, OH 45215 (US); PARTIKA, Mark, Cincinnati, OH 45215 (US)
(74) Representative: Openshaw & Co.

(56) References cited:
- CN-A- 108 169 331
- US-A1- 2004 149 040
- US-A1- 2017 284 972
- US-A1- 2018 259 489
- WANG XIAOHUI ET AL: "Development of Phased Array Ultrasonic Detection System Using a Post-Processing Technique", 2018 IEEE INTERNATIONAL CONFERENCE ON MECHATRONICS AND AUTOMATION (ICMA), IEEE, 5 August 2018 (2018-08-05), pages 1717 - 1721, XP033415985, ISBN: 978-1-5386-6074-4, [retrieved on 20181005], DOI: 10.1109/ICMA.2018.8484588
- ZHOU SHIYUAN ET AL: "Focusing surface wave imaging with flexible 2D array", PROCEEDINGS OF SPIE; [PROCEEDINGS OF SPIE ISSN 0277-786X VOLUME 10524], SPIE, US, vol. 9804, 8 April 2016 (2016-04-08), pages 98042H - 98042H, XP060067973, ISBN: 978-1-5106-1533-5, DOI: 10.1117/12.2239960

## Description

### PRIORITY INFORMATION

The present application claims priority to U.S. Provisional Patent Application Serial Number 62/818,229 filed on 14 March 2019.

### FIELD

The present disclosure generally relates to systems and methods for inspecting components, or more particularly, to portable acoustic inspection devices and associated methods of operation.

### BACKGROUND

Machine components in a variety of industries are frequently inspected for defects or characteristics which may affect performance of the component or machine. For example, such characteristic may be used to predict premature component failure, to formulate a maintenance schedule for such components, or to otherwise assess component quality or condition. For example, components in the aviation, automotive, oil and gas, nuclear power generation, and other industries are frequently inspected for faults and imperfections which may result in component and/or system failure if left unrepaired. In addition, particularly when the components are formed from one or more metals, such techniques may be used to assess the crystallographic orientations, grain sizes, or other surface characteristics of the component.

One conventional method of inspecting components includes using a laser to generate energy which excites a surface of a component and obtaining surface wave velocity measurements to inspect the surface of that component. However, such a system requires an optical table setup and a non-portable power source. Thus, use of such a system is limited to analyzing components that are removed from the machine in which they operate and that are of a sufficiently small size to permit mounting on the optical table. Moreover, such systems are complex, expensive, and not suitable for quick and accurate inspection of components, thus reducing their commercial viability in a variety of applications.
US 2018/259489 A1 relates to a phased array probe system and method for testing a spotweld on a structure, said phased array probe including a plurality of transducers. Wang et al "Development of phased array ultrasonic detection system using a post-processing technique" 2018, IEEE International Conference on Mechatronics and Automation (Pages 1717-1721, 5 August 2018) relates to the development of a phased array ultrasonic detection system. US 2017/284972 A1 relates to a phased array ultrasound total focusing method in which the ultrasound energy is transmitted as plane waves and the response signals are processed as plane waves. "Focusing surface save imaging with flexible 2D array" by Zhou Shiyuan et al discloses a flexible 2D array probe having piezoelectric array elements that can excite and receive ultrasonic waves independently. US 2004/0149040 A1 discloses a transducer-based sensor system including a first transducer system and a second transducer system spaced from the first transducer system.

Accordingly, an improved inspection device facilitating quick, easy, and accurate component inspection would be useful. More particularly, an acoustic inspection device that provides a cost-effective, accurate, and portable way to inspect components without removing those components from the system in which they operate would be particularly beneficial.

### BRIEF DESCRIPTION

Aspects and advantages will be set forth in part in the following description, or may be obvious from the description, or may be learned through practice of the invention.

The invention is defined by the appended claims. Claim 1 defines a portable acoustic inspection device for inspecting a component and claim 12 defines a method of inspecting a component. In the following, apparatus and/or methods referred to as embodiments that nevertheless do not fall within the scope of the claims should be understood as examples useful for understanding the invention.

According to one example of the present subject matter, a portable acoustic inspection device for inspecting a component is provided. The acoustic inspection device includes an acoustic transmitter for generating an acoustic wave that travels along a surface of the component, an acoustic receiver spaced apart from the acoustic transmitter by a transducer gap, the acoustic receiver being configured for receiving the acoustic wave, and a controller in operative communication with the acoustic receiver. The controller is configured for obtaining data indicative of the acoustic wave from the acoustic receiver and determining at least one surface characteristic of the component based at least in part on the data indicative of the acoustic wave.

According to another example, a method of inspecting a component is provided including directing an acoustic wave along a surface of the component from a first location, receiving the acoustic wave at a second location spaced apart from the first location, and determining at least one surface characteristic of the component based on the received acoustic wave.

These and other features, aspects and advantages will become better understood with reference to the following description and appended claims. The accompanying drawings, which are incorporated in and constitute a part of this specification, illustrate embodiments of the invention and, together with the description, serve to explain certain principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures.
FIG. 1 provides a perspective view of an acoustic inspection device inspecting a component according to an exemplary embodiment of the present subject matter.
FIG. 2 provides a schematic view of an acoustic transmitter and an acoustic receiver of the exemplary acoustic inspection device of FIG. 1 inspecting a surface of the component according to an exemplary embodiment of the present subject matter.
FIG. 3 provides a schematic view of a plurality of acoustic transducers transmitting acoustic waves according to an exemplary embodiment of the present subject matter.
FIG. 4 provides a method of inspecting a component according to an exemplary embodiment of the present subject matter.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "first," "second," and "third" may be used interchangeably to distinguish one component from another and are not intended to signify location or importance of the individual components. In addition, the terms "upstream" and "downstream" refer to the relative direction with respect to the motion of an object or a flow of a fluid, sound wave, light wave, etc. For example, "upstream" refers to the direction from which the object has moved or fluid has flowed, and "downstream" refers to the direction to which the object is moving or the fluid is flowing. Furthermore, as used herein, terms of approximation, such as "approximately," "substantially," or "about," refer to being within a ten percent margin of error.

The present subject matter is generally directed to an acoustic inspection device and an associated method for inspecting a component. The acoustic inspection device is portable and includes an acoustic transmitter and receiver that may be placed on opposite sides of an inspection region on the surface of the component. The acoustic transmitter has an array of acoustic transducers for generating an acoustic wave that travels along a surface of the component and the acoustic receiver has an array of acoustic transducers for receiving that acoustic wave. A controller determines at least one surface characteristic of the component from the measured acoustic wave, such as its crystalline structure or grain size.

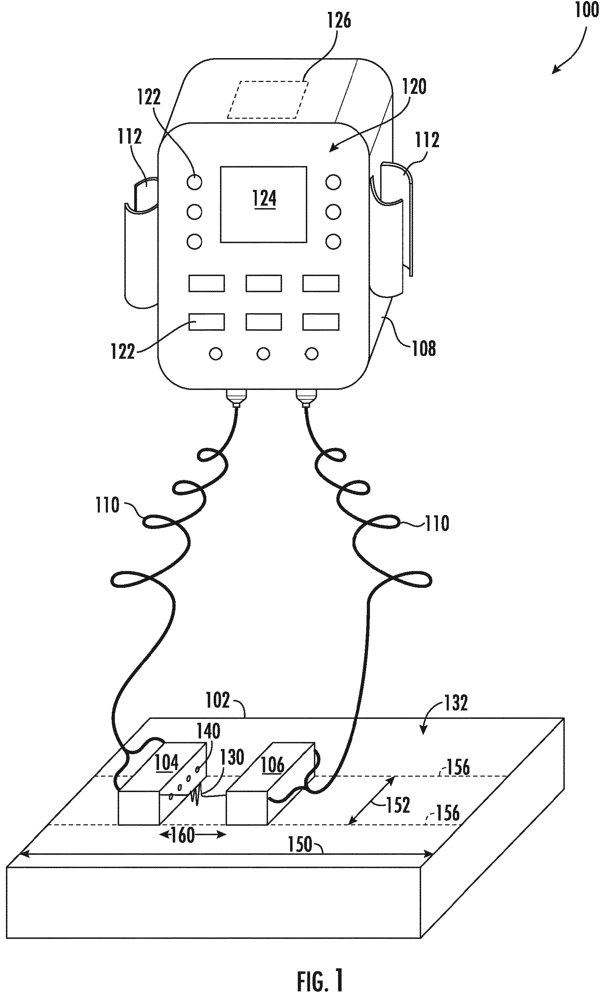

Referring to FIG. 1, an acoustic inspection device 100 that may be used for inspecting a component 102 will be described according to an exemplary embodiment of the present subject matter. As illustrated, acoustic inspection device 100 includes an acoustic transmitter 104 and an acoustic receiver 106 that are connected to a device housing 108 by suitable electrical connectors or wires 110. Device housing 108 may further include mounting clips 112 mounted thereon and being configured for receiving acoustic transmitter 104 and acoustic receiver 106 when not in use, e.g., to facilitate transportation and improve the portability of acoustic inspection device 100. Device housing 108 may generally include any suitable electrical components for facilitating operation of acoustic inspection device 100, as described in detail below.

A user interface panel 120 is located on device housing 108 and may include a variety of user inputs 122 that are generally configured for controlling the operation and inspection process performed by acoustic inspection device 100. Although user inputs 122 are illustrated as push buttons, it should be understood that user inputs 122 and the configuration of acoustic inspection device 100 shown in FIG. 1 is provided by way of example only. More specifically, user interface panel 120 may include various input components, such as one or more of a variety of touch-type controls, electrical, mechanical or electro-mechanical input devices including rotary dials, push buttons, and touch pads. User interface panel 120 may also be provided with one or more graphical display devices or display components 124, such as a digital or analog display device, designed to provide operational feedback or other information to the user.

Generally, acoustic inspection device 100 may include a controller 126 in operative communication with user interface panel 120, acoustic transmitter 104, acoustic receiver 106, or any other suitable components of acoustic inspection device 100. User interface panel 120 of acoustic inspection device 100 may be in communication with controller 126 via, for example, one or more signal lines or shared communication busses, and signals generated in controller 126 operate acoustic inspection device 100 in response to user input via user inputs 122. Input/Output ("I/O") signals may be routed between controller 126 and various operational components of acoustic inspection device 100 such that operation of acoustic inspection device 100 can be regulated by controller 126. In addition, controller 126 may also be communication with one or more sensors or probes, such as acoustic transmitter 104 and acoustic receiver 106, which may be used to inspect component 102 using acoustic waves and provide inspection data to controller 126 for analysis.

Controller 126 is a "processing device" or "controller" and may be embodied as described herein. Controller 126 may include a memory and one or more microprocessors, microcontrollers, application-specific integrated circuits (ASICS), CPUs or the like, such as general or special purpose microprocessors operable to execute programming instructions or micro-control code associated with operation of acoustic inspection device 100, and controller 126 is not restricted necessarily to a single element. The memory may represent random access memory such as DRAM, or read only memory such as ROM, electrically erasable, programmable read only memory (EEPROM), or FLASH. In one embodiment, the processor executes programming instructions stored in memory. The memory may be a separate component from the processor or may be included onboard within the processor. Alternatively, controller 126 may be constructed without using a microprocessor, e.g., using a combination of discrete analog and/or digital logic circuitry (such as switches, amplifiers, integrators, comparators, flip-flops, AND gates, and the like) to perform control functionality instead of relying upon software.

According to the illustrated embodiment, acoustic inspection device 100 is a handheld, portable unit configured for being easily transported from location to location. In this regard, acoustic inspection device 100 may be carried to a machine (not shown) that contains component 102 to be inspected. Notably, due to the compact size and portability of acoustic inspection device 100, significant machine down time may be reduced as component 102 need not be removed from the machine during inspection. In addition, the size of inspected components may increase as the inspection size is limited only by the length of electrical wires 110 (which may be any suitable length), and the inspection process may be quick, cheap, and accurate.

As shown in FIG. 1, component 102 is a fan disk for a gas turbine engine. However, it should be appreciated that according to alternative embodiments, component 102 may be any suitable part, feature, component, or system components from any suitable machine or device used in any suitable industry. The use of fan disk as component 102 herein is not intended to limit the scope of the present subject matter in any manner. In addition, the particular configuration of acoustic inspection device 100, the packaging of device housing 108, and the types of transmitters and receivers used herein are not intended to limit the scope of the present subject matter. Indeed, it is contemplated that acoustic inspection device 100 may be used to inspect components in the oil and gas industry, the aviation industry, the automotive industry, the amusement park industry, the nuclear power industry, the power generation industry, or any other suitable industry.

In addition, although component 102 is described herein as being formed at least in part from metal, it should be appreciated that acoustic inspection device 100 may be used for inspecting components having any other suitable shape, size, and material, e.g., such as thermoplastics, ceramics, etc. For example, acoustic inspection device 100 may be used to inspect the inner diameter, the outer diameter, or the web of a fan disc, a component flange, a forged disc, a billet of material, a finished part, or any other suitable component having any other suitable size and shape and being formed from any other suitable material.

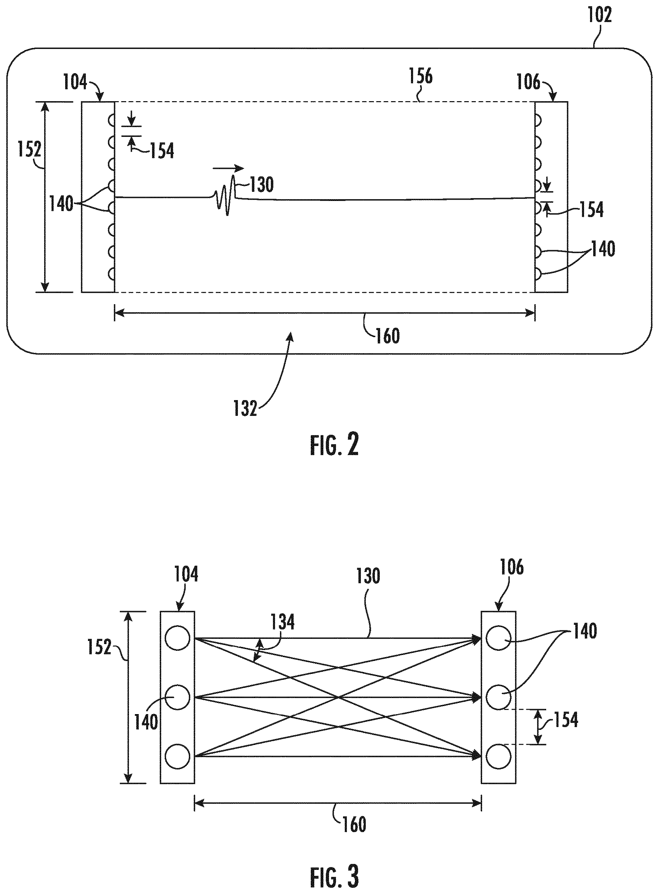

Referring now also to FIG. 2, the manner in which acoustic inspection device 100 inspects component 102 will be described according to an exemplary embodiment. In general, acoustic inspection device 100 uses acoustic transmitter 104 to transmit or generate an acoustic wave 130 that travels along a surface 132 of component 102. Simultaneously, acoustic inspection device 100 uses acoustic receiver 106 to receive the acoustic wave 130. Specifically, an operator of acoustic inspection device 100 may position acoustic transmitter 104 at one location (i.e., an excitation region) on component 102 while simultaneously positioning acoustic receiver 106 at a second location (i.e., an inspection or interrogation region) spaced apart from acoustic transmitter 104 on surface 132 of component 102.

As used herein, the terms "acoustic transmitter" and "acoustic receiver" are used generally to refer to the sensor, transducer, or device that transmits or generates acoustic wave 130 which interacts with component 102 to facilitate the inspection process. For example, acoustic transmitter 104 may be any suitable device or system for exciting a region of component 102 with an acoustic wave. In this regard, acoustic transmitter 104 may be an excitation source, an energy source, a vibration source, or any other device for generating a vibration, acoustic wave, or surface acoustic wave that may travel through component 102 or along the component surface 132. Similarly, acoustic receiver 106 may be any suitable device or system for receiving, measuring, quantifying, or otherwise detecting such acoustic wave, or more particularly, the acoustic wave response after the acoustic wave has interacted with the surface of component 102.

Thus, acoustic receiver 106 may generally be configured for measuring acoustic wave 130, or the acoustic wave response at one or more locations on surface 132 of component 102. In this regard, for example, the acoustic propagation properties of a region of component 102 may affect the manner in which vibrations or sound waves travel through the material. For example, the material used, the method of formation, the structural configuration, and other factors may affect the acoustic properties of component 102. Acoustic receiver 106 may detect variations such as sound attenuation or velocity to facilitate acoustic inspection and provide useful information regarding component 102. This process of exciting and interrogating, reading, mapping, or otherwise obtaining useful data regarding the acoustic response of component 102 may reveal useful information regarding surface characteristics of component 102.

According to an exemplary embodiment, acoustic transmitter 104 and acoustic receiver 106 comprise an array of acoustic transducers 140. In general, acoustic transducer is any device that converts an electrical signal or control signal into sound waves or that converts a sound wave into an electrical signal. Acoustic transmitter 104 and acoustic receiver 106 may further include any other suitable electronic components for conditioning the sound waves or electrical signals generated, such as amplifiers, conditioning circuits, etc. In addition, it should be appreciated that acoustic transducers as described herein may operate in one or all of a transmit mode, a receiving mode, or a transmit/receive mode such that the same transducers may be used in acoustic transmitter 104 and acoustic receiver 106.

Moreover, it should be appreciated that although acoustic inspection device 100 is described herein as having one acoustic transmitter 104 for transmitting acoustic wave 130 and one acoustic receiver 106 for receiving acoustic wave 130, the scope of the present subject matter is deemed to include any suitable number of transmitters and receivers positioned in any suitable manner for sending and/or receiving acoustic waves or signals. In this regard, controller 126 may operate acoustic receiver 106 as the transmitter and acoustic transmitter 104 as the receiver when desired.

Moreover, controller 126 may be configured to operate the plurality of acoustic transducers 140 within either acoustic transmitter 104 or acoustic receiver 106 in either the acoustic receiving or transmitting mode. In other words, during a single inspection process, acoustic transmitter 104 may be generating acoustic waves 130 at some acoustic transducers 140 while simultaneously receiving acoustic waves 130 at other acoustic transducers 140. The operation of acoustic inspection device 100 described herein is not intended to be limiting. For example, although acoustic transmitter 104 and acoustic receiver 106 are described herein as including an array of acoustic transducers 140, it should be appreciated that these devices may include as few as one acoustic transducer 140 each not according to the present invention.

In addition, according to exemplary embodiments, controller 126 may be configured for operating acoustic transmitter 104 and acoustic receiver 106 to achieve a full matrix capture (FMC) of acoustic waves 130 generated by acoustic inspection device 100. As used herein, the term "full matrix capture" (FMC) and the like is intended to refer to a data acquisition strategy that provides for every transmitter and receiver to communicate acoustic data therebetween. In this manner, full matrix capture enables the capture of every possible transmit-receive combination for a given ultrasonic or acoustic transducer. Full matrix capture may thus increase the reliability of ultrasonic inspection, provide higher resolution images or data to facilitate improved analysis, and enable cost effective detection of component microstructures, surface textures, grain sizes and orientations, etc.

An exemplary illustration of the operation of the full matrix capture is illustrated in FIG. 3, which illustrates each acoustic transducer 140 in acoustic transmitter 104 as transmitting an acoustic wave 130 to each of acoustic transducers 140 within acoustic receiver 106. Although only three acoustic transducers 140 are illustrated herein, it should be appreciated that acoustic transmitter 104 and acoustic receiver 106 may include any suitable number, position, configuration, and operating mode of acoustic transducers 140 according to alternative embodiments.

Referring again to FIG. 2, during an inspection process, acoustic receiver 106 may be spaced apart from acoustic transmitter 104 by a transducer gap 160. For example, according to the illustrated embodiment, transducer gap 160 is approximately 3.81 mm (0.15 inch). However, according to alternative embodiments, transducer gap 160 may be between about 1.27 and 25.4 mm (0.05 and 1 inch), between about 2.54 and 6.35 mm (0.1 and 0.25 inch), or any other suitable distance for facilitating the acoustic inspection process.

In addition, acoustic transmitter 104 and acoustic receiver 106 may include a plurality of acoustic transducers 140 spaced apart along a substantially straight line to define a scan width 152. Notably, according to an exemplary embodiment, the plurality of acoustic transducers 140 are spaced apart from each other by a transducer gap or spacing 154. The transducer spacing 154 may be selected such that the plurality of acoustic transducers 140 inspect strips of surface 132 of component 102.
While moving acoustic transmitter 104 and acoustic receiver 106 in tandem across a scan length 150 to be inspected, the scan length 150 can be subdivided into measured increments by use of a positional encoding device. These strips of data can be combined using the encoding device and transducer positional information to form a complete picture of surface 132.

More specifically, when acoustic transmitter 104 and acoustic receiver 106 are translated in tandem across the surface of component 102, controller 126 may obtain a two-dimensional image (e.g., as indicated by dotted lines 156 in FIG. 2) of surface 132. Thus, a two-dimensional image 156 may map a section of surface 132 and have the dimensions of the scan length 150 by the scan width 152. An operator may continuously reposition acoustic transmitter 104 and acoustic receiver 106 to obtain plurality of images of surface 132, which controller 126 may stitch together to form an overall image of surface 132 of component 102, which may be used to detect component characteristics, defects, faults, etc.

Notably, the scan length 150, scan width 152, and transducer spacings 154 may vary depending on the specific configuration of acoustic inspection device 100, the types of transducers used, the components being inspected, or any other suitable factors or applications. For example, according to the illustrated embodiment, scan length 150 is approximately 508 mm (20 inches). However, according to alternative embodiments, scan length 150 may be between about 12.7 and 1270 mm (0.5 and 50 inches), between about 127 and 1016 mm (5 and 40 inches), between about 254 and 762 mm (10 and 30 inches), or any other suitable distance for facilitating the acoustic inspection process.

For example, according to an exemplary embodiment, each of acoustic transmitter 104 and acoustic receiver 106 may have an array of between about four and 256 acoustic transducers 140, and the acoustic transmitter 104 may have a number of acoustic transducers 140 similar to or different than the acoustic receiver 106. According to other embodiments, each of acoustic transmitter 104 and acoustic receiver 106 may include between about 16 and 128 acoustic transducers, between about 40 and 80 acoustic transducers, or about 64 acoustic transducers. In addition, it should be appreciated that acoustic transducers 140, although illustrated as aligned along a straight line, could be stacked in multiple rows, or could be positioned in any other suitable manner within acoustic transmitter 104 and acoustic receiver 106.

For example, according to the illustrated embodiment, the transducer spacing 154 may be between about 0.127 and 12.7 mm (0.005 and 0.5 inch), between about 0.254 and 0.508 mm (0.01 and 0.02 inch), or about 0.406 mm (0.016 inch). However, transducer spacing 154 may generally be selected to correspond with a sound steering angle 134 of acoustic wave 130 transmitted from each acoustic transducer 140.

Notably, acoustic transmitter 104 and acoustic receiver 106 may generate and receive acoustic waves of any suitable amplitude, wavelength, and frequency suitable for measuring component 102 for the desired surface characteristics. In this regard, for example, acoustic wave 130 may have a frequency of between about 0.1 and 80 MHz. According to alternative embodiments, acoustic wave 130 may have a frequency of between about 0.5 and 20 MHz, or about 10 MHz. However, it should be appreciated that any other suitable frequency may be used and acoustic wave 130 may be tailored to detect certain defects, surface quality characteristics, etc.

As used herein, the term "surface characteristic" and the like are intended to refer to qualitative characteristics, quantitatively measured features, or other properties of component 102, or more specifically, surface 132 of component 102. For example, the surface characteristics measured by acoustic inspection device 100 may include microtexture, surface roughness, cracks, micro-fractures, surface defects, or other surface aberrations or features. In addition, particularly when component 102 is formed from a metal, the surface characteristic may include information related to the crystalline structure of surface 132, to the crystal/grain orientation (e.g., such as microtexture), to the grain size, to the grain shape (e.g., such as honeycomb), or to any other metallurgical surface quality characteristic. In addition, controller 126 may be configured for calculating statistics of surface quality characteristics, such as the standard deviation of sound attenuation or velocity, whereby controller 126 analyzes a digital 2-D image 156 defined by scan length 150 and scan width 152, and calculates statistics of some or all measured signals within that area to predict, measure, estimate, or otherwise obtain an average grain characteristic.

Now that the construction and configuration of acoustic inspection device 100 has been described according to exemplary embodiments of the present subject matter, an exemplary method 200 for inspecting a component will be described according to an exemplary embodiment of the present subject matter. Method 200 can be used to inspect component 102 using acoustic inspection device 100, or may be used to inspect any other suitable component using any other suitable inspection system. In this regard, for example, controller 126 may be configured for implementing some or all steps of method 200. Further, it should be appreciated that the exemplary method 200 is discussed herein only to describe exemplary aspects of the present subject matter, and is not intended to be limiting.

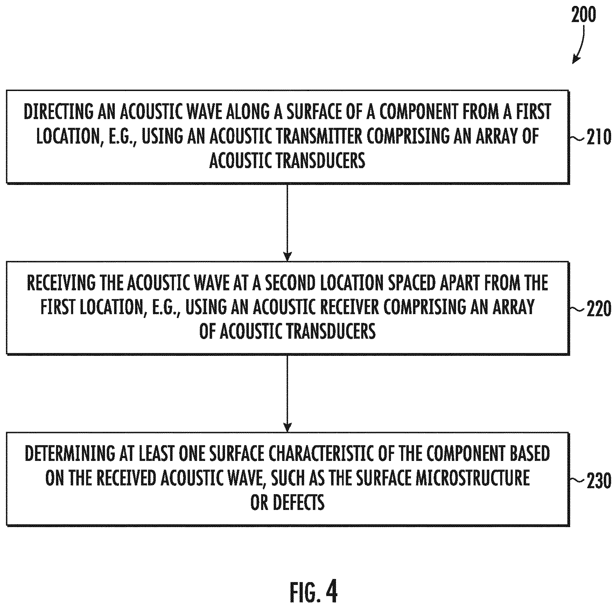

Referring now to FIG. 4, method 200 includes, at step 210, directing an acoustic wave along a surface of a component from a first location. Specifically, continuing the example from above, controller 126 may use acoustic transmitter 104 to transmit a plurality of acoustic waves from a plurality of acoustic transducers 140 across surface 132 of component 102. As illustrated, the plurality of transducers 140 in acoustic transmitter 104 may be oriented in an array substantially along a straight line, such that they define a scan width 152.

Step 220 includes receiving the acoustic wave at a second location spaced apart from the first location. For example, controller 126 may obtain data indicative of acoustic wave 130 from acoustic receiver 106. Notably, according the illustrated embodiment, acoustic receiver 106 includes the same number and spacing of acoustic transducers 140 but which are spaced apart from acoustic transducers 140 in acoustic transmitter 104 by transducer gap 160. Thus, controller 126 may obtain a two-dimensional image 156 of surface 132. As explained above, controller 126 may use such a two-dimensional image 156 to determine surface characteristics of component 102. In addition, an operator may sequentially move acoustic transmitter 104 and acoustic receiver 106 in tandem around a surface 132 of component 102 to obtain a total surface image of the entire component 102.

Step 230 includes determining at least one surface characteristic of the component based on the received acoustic wave. For example, as explained above, the acoustic wave may be used by controller 126 to determine surface microstructure, such as crystalline structure and/or grain size. In addition, the surface characteristic may be related to microtexture, surface roughness, component cracks or defects which may result in failure, or any other suitable acoustically detectable feature within surface 132 of component 102.

FIG. 4 depicts an exemplary control method having steps performed in a particular order for purposes of illustration and discussion. Those of ordinary skill in the art, using the disclosures provided herein, will understand that the steps of any of the methods discussed herein can be adapted, rearranged, expanded, omitted, or modified in various ways without deviating from the scope of the present disclosure. Moreover, although aspects of the methods are explained using acoustic inspection device 100 as an example, it should be appreciated that these methods may be applied to inspecting components using any suitable acoustic monitoring device.

This written description uses exemplary embodiments to disclose the invention, including the best mode, and also to enable any person skilled in the art to practice the invention, including making and using any devices or systems and performing any incorporated methods. The patentable scope of the invention is defined by the appended claims.

## Claims

1. A portable acoustic inspection device (100) for inspecting a component (102), the acoustic inspection device (100) comprising:
an acoustic transmitter (104) comprising a plurality of acoustic transducers, each acoustic transducer of the acoustic transmitter being for generating an acoustic wave (130) that travels along a surface (132) of the component (102);
an acoustic receiver (106) comprising a plurality of acoustic transducers positioned opposite from the acoustic transmitter (104) and spaced apart from the acoustic transmitter (104) by a transducer gap (160), each of the acoustic transducers (106) of the acoustic receiver being configured for receiving the acoustic wave (130);
wherein the acoustic transmitter (104) and the acoustic receiver (106) are configured to be moveable in tandem around the surface of the component (102); and
a controller (126) in operative communication with the acoustic receiver (106), the controller (126) being configured for:
obtaining data indicative of the acoustic wave (130) from the acoustic receiver (106);
determining at least one surface (132) characteristic of the component (102) based at least in part on the data indicative of the acoustic wave (130); and
stitching together a plurality of images of the surface (132), the plurality of images being obtained by a sequential movement of the acoustic transmitter (104) and acoustic receiver (106) in tandem around the surface (132) of the component (102).

2. The acoustic inspection device (100) of claim 1, wherein acoustic transducers (140) are operable in a transmitting mode and a receiving mode.

3. The acoustic inspection device (100) of any preceding claim, wherein at least one of the the acoustic receiver (106) or the acoustic transmitter (104) comprises:
a plurality of acoustic transducers (140), each of the plurality of transducers (140) being spaced apart from one another by a transducer spacing (154).

4. The acoustic inspection device (100) of claim 3, wherein the plurality of acoustic transducers (140) comprises between about 20 and 100 transducers (140) positioned along a substantially straight line.

5. The acoustic inspection device (100) of claim 3 or 4, wherein the transducer spacing (154) is between 1.27 and 3.81 mm, wherein the controller (126) is configured for acquiring a full matrix capture of a plurality of acoustic waves (130) generated by the plurality of acoustic transducers (140).

6. The acoustic inspection device (100) of any preceding claim, wherein the acoustic transducers (104) of the acoustic transmitter (104) have a scan width (152) of between 12.7 to 50.8 mm, and wherein the data indicative of the acoustic wave (130) forms a two-dimensional image (156) of the surface (132) of the component (102).

7. The acoustic inspection device (100) of any preceding claim, wherein scan length (150) of the acoustic transducers of the acoustic transmitter (104) and the acoustic receiver (106) is between about 127 and 1016 mm.

8. The acoustic inspection device (100) of any preceding claim, wherein the acoustic wave (130) has a frequency of between about 0.5 and 20 MHz.

9. The acoustic inspection device (100) of any preceding claim, wherein the at least one surface (132) characteristic comprises a crystalline structure or an average grain size of the surface (132) of the component (102).

10. The acoustic inspection device (100) of any preceding claim, wherein the acoustic transmitter (104), the acoustic receiver (106), and the controller (126) are stored in a portable device.

11. The acoustic inspection device (100) of any preceding claim, wherein the component (102) is metal.

12. A method (200) of inspecting a component (102) using a portable acoustic inspection device (100), the method (200) comprising:
directing, by an acoustic transmitter comprising a plurality of acoustic transducers, an acoustic wave (130) along a surface (132) of the component (102) from a first location;
receiving, by an acoustic receiver comprising a plurality of acoustic transducers positioned opposite from the acoustic transmitter (104) and spaced apart from the acoustic transmitter (104) by a transducer gap (160), the acoustic wave (130) at a second location spaced apart from the first location;
determining, by a controller in operative communication with the acoustic receiver, at least one surface (132) characteristic of the component (102) based on the received acoustic wave (130);
sequentially moving the acoustic transmitter (104) and acoustic receiver (106) in tandem around the surface (132) of the component (102) to obtain a plurality of images of the surface (132); and
stitching together the plurality of images of the surface (132).

13. The method (200) of claim 12, wherein directing an acoustic wave (130) comprises:
generating a plurality of acoustic waves (130) from the acoustic transducers (140) of the acoustic transmitter, wherein each of the plurality of transducers (140) are spaced apart from one another by a transducer spacing (154).

14. The method (200) of claim 12 or 13, further comprising:
acquiring a full matrix capture of the plurality of acoustic waves (130) generated by the plurality of acoustic transducers (140) of the acoustic transmitter.

15. The method (200) of any of claims 12-14, further comprising:
forming a two-dimensional image (156) of the surface (132) of the component (102) from the received acoustic wave (130).

## Patentansprüche

1. Tragbare akustische Prüfvorrichtung (100) zum Prüfen einer Komponente (102), wobei die akustische Prüfvorrichtung (100) umfasst:
einen Schallsender (104), umfassend eine Vielzahl von Schallwandlern, wobei jeder Schallwandler des Schallsenders zum Erzeugen einer Schallwelle (130) ist, die entlang einer Oberfläche (132) der Komponente (102) reist;
einen Schallempfänger (106), umfassend eine Vielzahl von Schallwandlern, die entgegengesetzt zu dem Schallsender (104) positioniert und durch eine Wandlerlücke (160) von dem Schallsender (104) beabstandet ist, wobei jeder der Schallwandler (106) des Schallempfängers zum Empfangen der Schallwelle (130) konfiguriert ist;
wobei der Schallsender (104) und der Schallempfänger (106) dazu konfiguriert sind, im Zusammenspiel um die Oberfläche der Komponente (102) bewegbar zu sein; und
einen Controller (126) in betriebsfähiger Kommunikation mit dem Schallempfänger (106), wobei der Controller (126) konfiguriert ist zum:
Beziehen von Daten, die die Schallwelle (130) angeben, von dem Schallempfänger (106);
Bestimmen mindestens eines Charakteristikums der Oberfläche (132) der Komponente (102) zumindest zum Teil auf der Basis der Daten, die die Schallwelle (130) angeben; und
Zusammenstitchen einer Vielzahl von Bildern der Oberfläche (132), wobei die Vielzahl von Bildern durch eine sequenzielle Bewegung des Schallsenders (104) und des Schallempfängers (106) im Zusammenspiel um die Oberfläche (132) der Komponente (102) bezogen wird.

2. Akustische Prüfvorrichtung (100) nach Anspruch 1, wobei Schallwandler (140) in einem Sendemodus und einem Empfangsmodus betreibbar sind.

3. Akustische Prüfvorrichtung (100) nach einem vorhergehenden Anspruch, wobei mindestens einer von dem Schallempfänger (106) oder dem Schallsender (104) umfasst:
eine Vielzahl von Schallwandlern (140), wobei jeder der Vielzahl von Wandlern (140) durch einen Wandlerabstand (154) voneinander beabstandet ist.

4. Akustische Prüfvorrichtung (100) nach Anspruch 3, wobei die Vielzahl von Schallwandlern (140) zwischen etwa 20 und 100 Wandlern (140) umfasst, die entlang einer im Wesentlichen geraden Linie positioniert sind.

5. Akustische Prüfvorrichtung (100) nach Anspruch 3 oder 4, wobei der Wandlerabstand (154) zwischen 1,27 und 3,81 mm beträgt, wobei der Controller (126) zum Erfassen einer Vollmatrixaufnahme einer Vielzahl von Schallwellen (130) konfiguriert ist, die von der Vielzahl von Schallwandlern (140) erzeugt wird.

6. Akustische Prüfvorrichtung (100) nach einem vorhergehenden Anspruch, wobei die Schallwandler (104) des Schallsenders (104) eine Abtastbreite (152) zwischen 12,7 und 50,8 mm aufweisen, und wobei die Daten, die die Schallwelle (130) angeben, ein zweidimensionales Bild (156) der Oberfläche (132) der Komponente (102) bilden.

7. Akustische Prüfvorrichtung (100) nach einem vorhergehenden Anspruch, wobei eine Abtastlänge (150) der Schallwandler des Schallsenders (104) und des Schallempfängers (106) zwischen etwa 127 und 1016 mm beträgt.

8. Akustische Prüfvorrichtung (100) nach einem vorhergehenden Anspruch, wobei die Schallwelle (130) eine Frequenz zwischen etwa 0,5 und 20 MHz aufweist.

9. Akustische Prüfvorrichtung (100) nach einem vorhergehenden Anspruch, wobei das mindestens eine Charakteristikum der Oberfläche (132) eine Kristallstruktur oder eine durchschnittliche Korngröße der Oberfläche (132) der Komponente (102) umfasst.

10. Akustische Prüfvorrichtung (100) nach einem vorhergehenden Anspruch, wobei der Schallsender (104), der Schallempfänger (106) und der Controller (126) in einer tragbaren Vorrichtung gelagert sind.

11. Akustische Prüfvorrichtung (100) nach einem vorhergehenden Anspruch, wobei die Komponente (102) Metall ist.

12. Verfahren (200) zum Prüfen einer Komponente (102) unter Verwendung einer tragbaren akustischen Prüfvorrichtung (100), wobei das Verfahren (200) umfasst:
Leiten einer Schallwelle (130) entlang einer Oberfläche (132) der Komponente (102) von einer ersten Stelle durch einen Schallsender, umfassend eine Vielzahl von Schallwandlern;
Empfangen der Schallwelle (130) an einer zweiten Stelle, die von der ersten Stelle beabstandet ist, durch einen Schallempfänger, umfassend eine Vielzahl von Schallwandlern, die entgegengesetzt zu dem Schallsender (104) positioniert und durch eine Wandlerlücke (160) von dem Schallsender (104) beabstandet ist;
Bestimmen mindestens eines Charakteristikums der Oberfläche (132) der Komponente (102) auf der Basis der empfangenen Schallwelle (130) durch einen Controller in betriebsfähiger Kommunikation mit dem Schallempfänger;
sequenzielles Bewegen des Schallsenders (104) und des Schallempfängers (106) im Zusammenspiel um die Oberfläche (132) der Komponente (102), um eine Vielzahl von Bildern der Oberfläche (132) zu beziehen; und
Zusammenstitchen der Vielzahl von Bildern der Oberfläche (132).

13. Verfahren (200) nach Anspruch 12, wobei das Leiten einer Schallwelle (130) umfasst:
Erzeugen einer Vielzahl von Schallwellen (130) von den Schallwandlern (140) des Schallsenders, wobei jeder der Vielzahl von Wandlern (140) durch einen Wandlerabstand (154) voneinander beabstandet ist.

14. Verfahren (200) nach Anspruch 12 oder 13, ferner umfassend:
Erfassen einer Vollmatrixaufnahme der Vielzahl von Schallwellen (130), die von der Vielzahl von Schallwandlern (140) des Schallsenders erzeugt wird.

15. Verfahren (200) nach einem der Ansprüche 12-14, ferner umfassend:
Bilden eines zweidimensionalen Bilds (156) der Oberfläche (132) der Komponente (102) aus der empfangenen Schallwelle (130).

## Revendications

1. Dispositif (100) d'inspection acoustique portable destiné à inspecter un composant (102), le dispositif (100) d'inspection acoustique comprenant :
un émetteur acoustique (104) comprenant une pluralité de transducteurs acoustiques, chaque transducteur acoustique de l'émetteur acoustique étant destiné à générer une onde acoustique (130) qui se propage le long d'une surface (132) du composant (102) ;
un récepteur acoustique (106) comprenant une pluralité de transducteurs acoustiques positionnés à l'opposé de l'émetteur acoustique (104) et espacés de l'émetteur acoustique (104) par un espace de transducteur (160), chacun des transducteurs acoustiques (106) du récepteur acoustique étant configuré pour recevoir l'onde acoustique (130) ;
dans lequel l'émetteur acoustique (104) et le récepteur acoustique (106) sont configurés pour être mobiles en tandem autour de la surface du composant (102) ; et
un dispositif de commande (126) en communication fonctionnelle avec le récepteur acoustique (106), le dispositif de commande (126) étant configuré pour :
obtenir des données indicatives de l'onde acoustique (130) depuis le récepteur acoustique (106) ;
déterminer au moins une caractéristique de surface (132) du composant (102) sur la base, au moins en partie, des données indicatives de l'onde acoustique (130) ; et
assembler une pluralité d'images de la surface (132), la pluralité d'images étant obtenue par un déplacement séquentiel de l'émetteur acoustique (104) et du récepteur acoustique (106) en tandem autour de la surface (132) du composant (102).

2. Dispositif (100) d'inspection acoustique selon la revendication 1, dans lequel les transducteurs acoustiques (140) peuvent fonctionner en mode d'émission et en mode de réception.

3. Dispositif (100) d'inspection acoustique selon une quelconque revendication précédente, dans lequel au moins l'un parmi le récepteur acoustique (106) et l'émetteur acoustique (104) comprend :
une pluralité de transducteurs acoustiques (140), chacun de la pluralité de transducteurs (140) étant espacé d'un autre selon un espacement entre transducteurs (154).

4. Dispositif (100) d'inspection acoustique selon la revendication 3, dans lequel la pluralité de transducteurs acoustiques (140) comprend entre environ 20 et 100 transducteurs (140) positionnés le long d'une ligne sensiblement droite.

5. Dispositif (100) d'inspection acoustique selon la revendication 3 ou 4, dans lequel l'espacement entre transducteurs (154) est compris entre 1,27 et 3,81 mm, dans lequel le dispositif de commande (126) est configuré pour acquérir une capture matricielle complète d'une pluralité d'ondes acoustiques (130) générées par la pluralité de transducteurs acoustiques (140).

6. Dispositif (100) d'inspection acoustique selon une quelconque revendication précédente, dans lequel les transducteurs acoustiques (104) de l'émetteur acoustique (104) présentent une largeur de balayage (152) comprise entre 12,7 et 50,8 mm, et dans lequel les données indicatives de l'onde acoustique (130) forment une image bidimensionnelle (156) de la surface (132) du composant (102).

7. Dispositif (100) d'inspection acoustique selon une quelconque revendication précédente, dans lequel la longueur de balayage (150) des transducteurs acoustiques de l'émetteur acoustique (104) et du récepteur acoustique (106) est comprise entre environ 127 et 1 016 mm.

8. Dispositif (100) d'inspection acoustique selon une quelconque revendication précédente, dans lequel l'onde acoustique (130) présente une fréquence comprise entre environ 0,5 et 20 MHz.

9. Dispositif (100) d'inspection acoustique selon une quelconque revendication précédente, dans lequel l'au moins une caractéristique de surface (132) comprend une structure cristalline ou une taille moyenne de grains de la surface (132) du composant (102).

10. Dispositif (100) d'inspection acoustique selon une quelconque revendication précédente, dans lequel l'émetteur acoustique (104), le récepteur acoustique (106) et le dispositif de commande (126) sont stockés dans un dispositif portable.

11. Dispositif (100) d'inspection acoustique selon une quelconque revendication précédente, dans lequel le composant (102) est métallique.

12. Procédé (200) d'inspection d'un composant (102) à l'aide d'un dispositif (100) d'inspection acoustique portable, le procédé (200) comprenant :
le fait de diriger, par un émetteur acoustique comprenant une pluralité de transducteurs acoustiques, une onde acoustique (130) le long d'une surface (132) du composant (102) depuis un premier emplacement ;
la réception, par un récepteur acoustique comprenant une pluralité de transducteurs acoustiques positionnés à l'opposé de l'émetteur acoustique (104) et espacés de l'émetteur acoustique (104) par un espace de transducteur (160), de l'onde acoustique (130) au niveau d'un second emplacement espacé du premier emplacement ;
la détermination, par un dispositif de commande en communication fonctionnelle avec le récepteur acoustique, d'au moins une caractéristique de surface (132) du composant (102) sur la base de l'onde acoustique (130) reçue ;
le déplacement séquentiel de l'émetteur acoustique (104) et du récepteur acoustique (106) en tandem autour de la surface (132) du composant (102) pour obtenir une pluralité d'images de la surface (132) ; et
l'assemblage de la pluralité d'images de la surface (132).

13. Procédé (200) selon la revendication 12, dans lequel le fait de diriger l'onde acoustique (130) comprend :
la génération d'une pluralité d'ondes acoustiques (130) depuis les transducteurs acoustiques (140) de l'émetteur acoustique, chacun de la pluralité de transducteurs (140) étant espacé d'un autre selon un espacement entre transducteurs (154).

14. Procédé (200) selon la revendication 12 ou 13, comprenant en outre :
l'acquisition d'une capture matricielle complète de la pluralité d'ondes acoustiques (130) générées par la pluralité de transducteurs acoustiques (140) de l'émetteur acoustique.

15. Procédé (200) selon l'une quelconque des revendications 12 à 14, comprenant en outre :
la formation d'une image bidimensionnelle (156) de la surface (132) du composant (102) à partir de l'onde acoustique (130) reçue.
